# EUROPEAN PATENT SPECIFICATION

(11) **EP 3 448 081 B1**
(45) Date of publication and mention of the grant of the patent: **17.06.2020**
(21) Application number: 17186989.4
(22) Date of filing: 21.08.2017
(51) Int. Cl.: H04W 24/02, H04W 84/12, H04W 88/08, H04W 16/10, H04W 72/04, H04W 16/14

(54) **DEVICE AND METHOD FOR AUTOMATED TUNING OF AUTO-CHANNEL SELECTION (ACS) IN WIRELESS NETWORKS**
VORRICHTUNG UND VERFAHREN ZUR AUTOMATISCHEN ABSTIMMUNG VON AUTOMATISCHER KANALAUSWAHL IN DRAHTLOSEN NETZWERKEN
DISPOSITIF ET PROCÉDÉ D'ACCORD AUTOMATIQUE DE SÉLECTION AUTOMATIQUE DE CANAUX (ACS) DANS DES RÉSEAUX SANS FIL

(43) Date of publication of application: 27.02.2019
(73) Proprietor: Nokia Solutions and Networks Oy, 02610 Espoo (FI)
(72) Inventor: Ligata, Amir, 2018 Antwerpen (BE)
(74) Representative: IP HILLS NV

(56) References cited:
- EP-A1- 1 658 698
- EP-A2- 1 522 020
- US-A1- 2005 153 667
- US-A1- 2010 165 861
- US-A1- 2014 086 208
- US-A1- 2016 066 202
- US-A1- 2017 019 899

## Description

### Technical Field

The present invention generally relates to auto-channel selection or ACS in wireless local area networks (WLANs) such as Wi-Fi networks. An access point in such WLAN typically supports multiple frequency bands for communication with wireless devices. In the example of Wi-Fi networks, an access point may for instance support the 2.4 GHz frequency band and the 5 GHz frequency band. Within a supported frequency band, multiple channels can be selected. In the 2.4 GHz frequency band for instance, up to fourteen different channels can be selected with the usage of the channels 12, 13 and 14 varying from country to country. For the selection of the channel, each vendor of access points implements a vendor specific ACS algorithm, typically embedded in the chipset drivers. The present invention more particularly concerns the setting of configuration parameters of such an ACS algorithm.

### Background

WLANs, in particular Wi-Fi networks, are being deployed both indoor and outdoor at a steadily growing pace. This results in a dense Wi-Fi network landscape with significant overlap in geographical coverage, in particular on the popular 2.4 GHz frequency band. Consequently, interference and contention emerge as the most severe problems in Wi-Fi networks, drastically reducing the user experience. To reduce the problem of interference and contention, manufacturers of Wi-Fi access points implement vendor-specific ACS algorithms that help the access point select or re-select the operating channel in order to avoid or reduce interference and contention by neighbouring Wi-Fi networks.

Although the exact implementation of ACS algorithms remains vendor specific, all of these ACS algorithms scan available channels in the background, estimate the interference experienced by the access point, and steer the access point to operate on an alternative channel, typically the least congested channel, as soon as the current operating channel is deemed overly congested. The ACS algorithm runs continuously and/or may be triggered frequently depending on the environment wherein the access point is operating or the user activity on the access point, as a result of which channel reselections may occur frequently.

Manufacturers of WLAN access points provide flexibility and enable the installer of an access point to manually configure certain ACS configuration parameters. These ACS configuration parameters for instance entail its insensitivity, i.e. a configuration parameter that specifies how long interference should be tolerated before channel reselection is triggered, and its frequency, i.e. a configuration parameter that specifies how frequent channel reselection should be allowed or what lockout time interval should at minimum be respected between two subsequent executions of the ACS algorithm. The ACS configuration parameter setting is done manually at installation of the access point and each time the user is complaining, for instance because frequent channel reselection leads to service interruption requiring all client devices that are communicating with the access point to re-establish the connection with the access point over the newly selected channel.

The setting of the ACS configuration parameters is a complex task that is executed by a technician typically following some rules of thumb. The selection of the ACS configuration parameters should ideally take into account the activity on the Wi-Fi network under consideration as well as the dynamics of neighbouring Wi-Fi networks that interfere with the Wi-Fi network under consideration. As soon as the environment changes, the ACS configuration parameter setting may become inadequate. The tuning of the ACS configuration parameters in general should strive at minimizing the impact on user experience while at the same time enabling the ACS algorithm to successfully remediate the problems of interference and contention in a dynamic, densely deployed WLAN landscape.

United States Patent Application US 2016/066202 A1 entitled "Methods and Apparatuses for Graphically Indicating Station Efficiency and Pseudo-Dynamic Error Vector Magnitude Information for a Network of Wireless Stations" recognizes the problem of ACS being inefficient as a result of short term observations only (see [0008] and [0205] in US 2016/066202 A1). US 2016/066202 A1 therefore proposes an alternate ACS that takes decisions on channel changes in view of long term observations of efficiency of channels, considering all users, usage patterns and interference patterns (see [0077] of US 2016/066202 A1).

European Patent Application EP 1 522 020 A2 entitled "System and Method for Making Managing Wireless Network Activity" describes a network security system that protects a wireless network against an intruder, i.e. a malicious user of the wireless network. The identity of the wireless access point under attack is emulated such that communication with the intruder can be continued but isolated. In addition, a channel change is executed by the wireless access point under attack such that communication with the access point by authorized, non-malicious users can continue on a different channel. EP 1 522 020 A2 in other words is using channel change for driving authorized users to a different channel when an intruder has been detected.

### Summary

The invention is defined in the appended claims.

The problems with manual setting of ACS configuration parameters such as the ACS insensitivity and the ACS frequency however are manifold. Firstly, manual setting of the ACS configuration parameters is not scalable. Each change of an ACS configuration parameter requires manual intervention of a technician and the required change depends from case to case. As a consequence, ACS configuration parameter tuning is often delayed and done only when the problem of interference and contention escalates. In other words, ACS configuration parameter values are usually non-optimal and tuning the ACS configuration parameters is done too late, when the user experience is already severely impacted.

Another problem with ACS configuration parameter setting is that significant time is needed to understand the underlying behaviour that is triggering frequent channel changes. Often, there is no insight into the users' activity on the WLAN under consideration and there is no visibility on the activity in neighbouring WLANs that interfere with the WLAN under consideration. As a consequence, tuning the ACS configuration parameters requires significant effort and time by the customer support technicians. Settings of a single WAN may have to be updated several times which negatively affects the user experience or may even lead to ACS algorithm deactivation and thus increased risk for interference and contention problems.

It is an objective of the present invention to disclose a device and method for automated tuning of ACS configuration parameters which overcomes one or several of the above-identified shortcomings of the existing manual ACS configuration parameter tuning.

Embodiments of the invention disclose a device for automated tuning of configuration parameters of an auto-channel selection function, abbreviated ACS function, in a wireless access point, as defined by claim 1, the device comprising:
- an ACS performance observer adapted to collect performance parameter values indicative for past performance of the ACS function;
- a wireless network inspector adapted to collect a user activity pattern for the wireless access point and an interference pattern for one or more neighbouring wireless access points;
- a behaviour tracker adapted to monitor recent user activity on the wireless access point and recent interference of the neighbouring wireless access point;
- an anomaly detector adapted to compare the recent user activity with the user activity pattern, to compare the recent interference with the interference pattern and to detect therefrom an anomaly in user activity or interference leading to contention;
- an ACS behaviour assessor adapted to compare the performance parameter values with the user activity patterns and the interference patterns in order to detect improper setting of configuration parameters of the ACS function comprising insensitivity and/or frequency of the ACS function within a user activity period, the user activity period being a time window wherein the user activity patterns show a user activity above a certain activity threshold; and
- a configuration parameter adjuster adapted to modify the insensitivity and/or the frequency of the ACS function upon detection of the anomaly and detection of the improper setting of configuration parameters of the ACS function, wherein the insensitivity of the ACS function corresponds to a configuration parameter specifying a time window during which interference above the interference deviation threshold be tolerated before the ACS function is triggering channel reselection, and wherein the frequency of the ACS function corresponds to a configuration parameter specifying a lockout time window, being a minimum time interval in between which the ACS function is triggering channel reselections.

Thus, embodiments of the invention implement an automated, self-adaptive tuning of the ACS algorithm that can be implemented at the operator side, e.g. as part of a management centre, or at the customer side, e.g. as part of the access point. The self-adaptive tuning entails a performance assessment of the currently running ACS algorithm. Various performance parameter values may be obtained for the currently running ACS algorithm, like for instance the amount of channel changing events over the past few days, the number of different channels selected, the channel changing continuity, etc. Performance assessment of the currently running ACS algorithm shall enable to determine if tuning of the ACS configuration parameters is desired. In addition, both the users' activity pattern on the considered WLAN as well as the activity pattern of neighbouring WLAN(s) which from the point of perspective of the considered WLAN represents an interference and/or contention pattern. These patterns are obtained from data covering a longer time window, typically several days or even weeks, since the last ACS configuration parameter update took place. Thirdly, the most recent data is collected with respect to users' activity on the considered WLAN and interference experienced from the neighbouring WLAN(s). The most recent activity and interference cover a shorter time window, e.g. the past 24 hours. Comparison of the recent user activity with the collected activity pattern and/or comparison of the recent interference with the collected interference pattern enables to detect an anomaly. In case of such anomaly, the ACS frequency and/or the ACS insensitivity are automatically adjusted to better match the current environmental conditions.

Embodiments of the device according to the invention automatically capture the access point activity as well as neighbouring WLAN dynamics, and autonomously optimizes the ACS algorithm. As no manual intervention or support is required, the automated self-adaptive ACS tuning according to the present invention is scalable. Moreover, the ACS configuration parameters are efficiently tuned to the current environmental conditions as the tuning is based on a comparison of recent activity/interference with long-term activity/interference patterns collected over a longer time period, and the tuning will be pushed towards low activity periods to avoid or minimize negative impact on user experience. In case of unusual high data activity, the ACS frequency should be decreased to avoid disturbing ongoing activities and the ACS insensitivity should also be decreased to enable fast and non-frequent channel reselection. In case of unusual low data activity, both the ACS frequency and the ACS insensitivity can be increased. This way, the ACS algorithm will adapt fast to the dynamics of neighbouring networks, i.e. interferers, before client devices start to transmit or receive intensively.

The performance of the current ACS algorithm is analysed by comparing the collected performance parameter values with the activity and interference patterns in order to detect improper setting of the ACS configuration parameters as a result of which further tuning of these parameters is desired. If for instance the user activity period, i.e. a time window during the day wherein the activity pattern shows a user activity above a certain activity threshold, includes channel changing events that have a negative effect on the user experience, the settings of the ACS algorithm are improper and require further tuning. If for instance the user activity period is characterized by a high interference score, the settings of the ACS algorithm are improper and require further tuning. In other words, if the performance score of the current ACS algorithm is low, the settings of the ACS algorithm require further tuning.

In embodiments of the device according to the present invention, defined by claim 2, the performance parameter values comprise one or more of:
- an amount of channel hopping events triggered by the ACS function over a predetermined number of days;
- time windows during the day wherein channel hopping events triggered by the ACS function occur;
- a number of different channels that were selected by the ACS function.

Indeed, to analyse the performance of the current ACS algorithm, the amount of channel changing events or the frequency of channel hopping may be considered, the amount of different channels selected by the ACS function, as well as the stability of this amount of channel changing events on a day-to-day basis. Alternatively or complementary, the channel hopping periods may be determined, i.e. time window(s) during the day wherein the channel changing occurs. Also here, the stability of these time window(s) on a day-to-day basis may be considered. The skilled person will appreciate that the above examples of ACS performance parameters are not exhaustive and that variant embodiments of the device according to the present invention may collect alternative parameter values that enable to assess the performance of the currently running ACS algorithm.

In embodiments of the device according to the present invention, defined by claim 3, the user activity pattern comprises time periods during the day wherein user activity on the wireless access point exceeds a certain activity threshold.

Indeed, preferably, determining the activity pattern comprises determining the user activity periods, i.e. the daily time window(s) during which there is significant user activity, e.g. with a total bandwidth exceeding a certain threshold, or a total number of users exceeding a certain threshold, or any alternate activity measuring parameter exceeding a certain activity threshold. During such user activity periods, a performant ACS algorithm does not trigger channel hops because such channel hops would have severe impact on the user experience as all active users would have to swap channel and see their service interrupted.

In embodiments of the device according to the present invention, defined by claim 4, the interference pattern comprises time periods during the day wherein an interference score determined from channel busy time, activity time and channel scans of the one or more neighbouring wireless access point exceeds a certain interference threshold.

Thus, to understand the reasons behind channel hopping behaviour, an interference score may be produced from the channel busy time, activity time and channel scans of the neighbouring wireless access point(s). Determining the interference pattern may then comprise determining the daily time window(s) wherein the interference score exceeds a certain interference threshold. During such interference time window(s), a performant ACS algorithm might trigger channel hops in order to adapt the wireless network to the environment before client devices start to actively transmit and/or receive.

In embodiments of the device according to the present invention, the anomaly detector is adapted to detect an anomaly whenever the deviation of the recent user activity from the activity pattern exceeds a predetermined activity deviation threshold and/or whenever the deviation of the recent interference from the interference pattern exceeds a predetermined interference deviation threshold.

Thus, a possible embodiment of the present invention relies on thresholding to determine if an anomaly occurred that might trigger adjustment of the ACS configuration parameters.

In general, the ACS insensitivity is a parameter indicating how long interference should be tolerated, e.g. how long a deviation from the interference pattern greater than a deviation threshold should be tolerated, before channel reselection is triggered. In case of high interference but no or limited user activity, the WLAN should be able to adapt to the environment as the impact that frequent channel changes may have is limited or inexistent. The ACS insensitivity should be low in other words. However, in case of high interference and high user activity, a more conservative approach should be adopted by an increased insensitivity that prevents frequent channel changes. In accordance with the present invention, the ACS insensitivity will be adjusted intelligently.

The ACS frequency indicates how frequent one should allow ACS triggering, e.g. by specifying the minimum time in between the triggering of the ACS algorithm, i.e. the so-called lockout time window. In case of high user activity, the ACS frequency should be decreased or the lockout window should be increased to avoid frequent service interrupting and user experience impacting channel changes. In case of low user activity, the ACS frequency might be increased or the lockout window might be decreased to enable the WAN to adapt quickly to the dynamics of neighbouring WLANs in times where frequent channel changes do not affect the user experience.

In addition to a device as defined by claim 1, embodiments of the present invention also concern a corresponding method for automated tuning of configuration parameters of an auto-channel selection function, abbreviated ACS function, in a wireless access point, the method being defined by claim 5, comprising:
- collecting performance parameter values indicative for past performance of the ACS function;
- collecting a user activity pattern for the wireless access point and an interference pattern for one or more neighbouring wireless access points;
- monitoring recent user activity on the wireless access point and recent interference of the neighbouring wireless access points;
- comparing the recent user activity with the user activity pattern and comparing the recent interference with the interference pattern to detect therefrom an anomaly in user activity or interference leading to contention;
- comparing the performance parameter values with the user activity patterns and the interference patterns in order to detect improper setting of configuration parameters of the ACS function comprising insensitivity and/or frequency of the ACS function within a user activity period, the user activity period being a time window wherein the user activity patterns show a user activity above a certain threshold; and
- modifying the insensitivity and/or the frequency of the ACS function upon detection of the anomaly and detection of the improper setting of configuration parameters of the ACS function, wherein the insensitivity of the ACS function corresponds to a configuration parameter specifying a time window during which interference above the interference deviation threshold be tolerated before the ACS function is triggering channel reselection, and wherein the frequency of the ACS function corresponds to a configuration parameter specifying a lockout time window, being a minimum time interval in between which the ACS function is triggering channel reselections.

Embodiments of the present invention further also concern a computer program product as defined by claim 6, comprising computer-executable instructions for performing the method according to the invention when the program is run on a computer.

Further embodiments of the present invention concern a computer readable storage medium as defined by claim 7, comprising the computer program product according to the invention, and a data processing system as defined by claim 8, programmed for carrying out the method according to the invention.

### Brief Description of the Drawings

Fig. 1 illustrates an environment wherein an embodiment of the device and method for automated tuning of ACS configuration parameters according to the present invention is used;
Fig. 2 is a pseudo flow diagram illustrating an embodiment of the method for automated tuning of ACS configuration parameters according to the present invention;
Fig. 3 is a functional block scheme of an embodiment of the device for automated tuning of ACS configuration parameters according to the present invention; and
Fig. 4 illustrates a suitable computing system 400 for realizing methods and devices according to embodiments of the invention.

### Detailed Description of Embodiment(s)

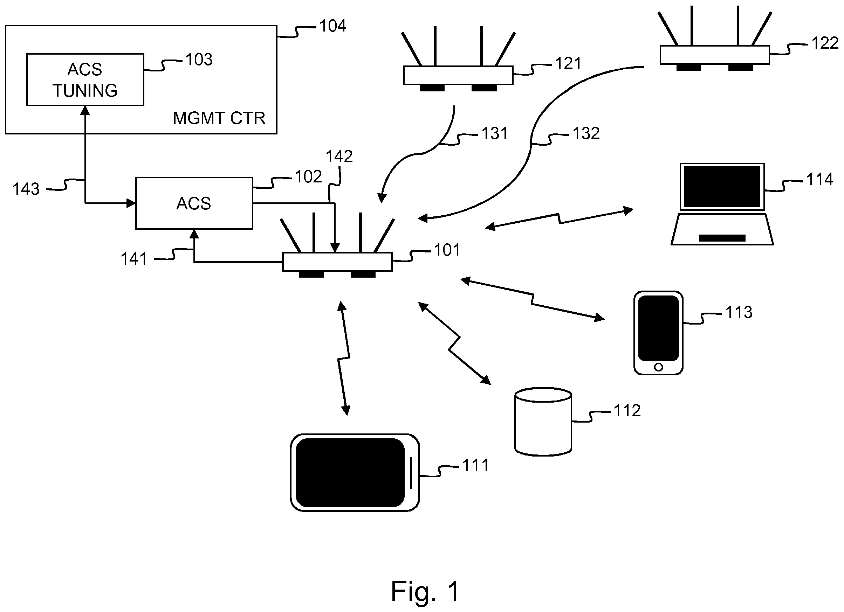

Fig. 1 shows a Wi-Fi access point 101 representing a WLAN. The access point 101 has an auto-channel selection function 102 that is embedded in its chips but for the sake of clarity is drawn separately in Fig. 1. The configuration parameters of this ACS function 102 are tuned by an ACS tuning device 103 that is supposed to form part of a remote management centre 104 run by an operator. Fig. 1 further shows several client devices, i.e. tablet computer 111, data storage 112, smartphone 113 and laptop 114, that all wirelessly connect with access point 101. At last, Fig. 1 shows a second, neighbouring Wi-Fi access point 121 and a third neighbouring Wi-Fi access point 122 that both interfere and content with access point 101 as is indicated by respective arrows 131 and 132. In the observation phase, as is indicated by arrows 141 and 143, the ACS tuning device 103 collects performance parameter values for the current ACS algorithm, information indicative for the activity pattern of access point 101 and information indicative for the interference pattern of neighbouring access points 121 and 122. The ACS tuning device 103 further tracks the behaviour, i.e. recent activity by access point 101 and recent interference induced by neighbouring access points 121 and 122. In the processing phase, the ACS tuning device 103 compares the recent activity with the activity pattern and compares the recent interference with the interference pattern in order to detect anomalies. In case of an anomaly, the ACS tuning device 103 tunes the ACS frequency and/or the ACS insensitivity, i.e. configuration parameters of the ACS function 102. As is indicated by arrow 143, the ACS tuning device 103 instructs the ACS function 102 to implement the new ACS frequency value and/or the new ACS insensitivity value. The ACS function 102 from now on controls the channel re-selection in access point 101 according to the new configuration parameter values, as is indicated by arrow 142.

It is noticed that as an alternative to the management centre 104, the ACS tuning device 143 could also be embedded in the chipset of access point 101, together with the ACS function 102.

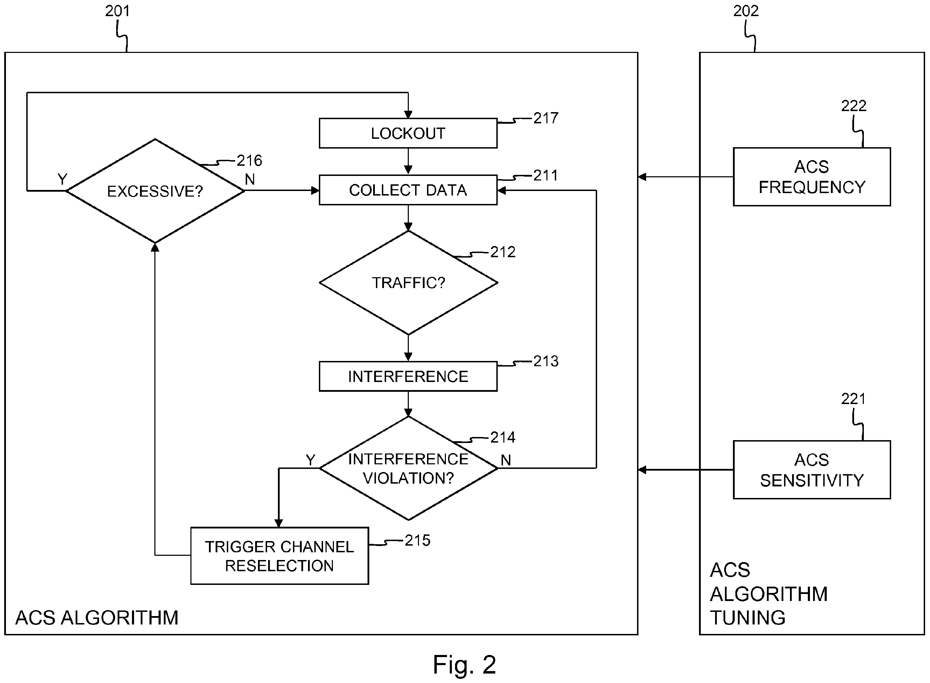

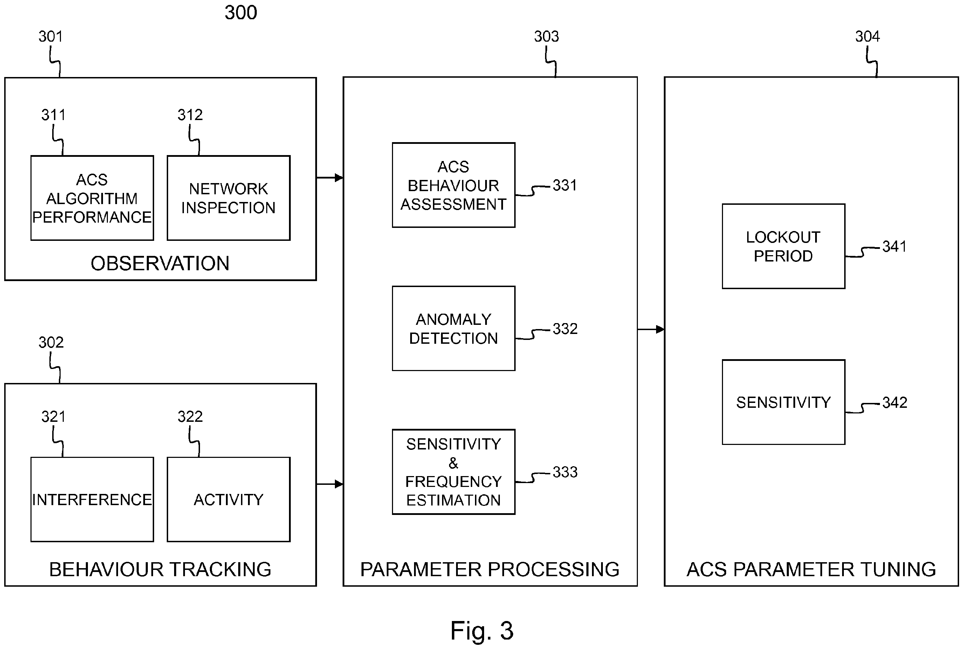

Fig. 2 illustrates the different steps in a typical ACS algorithm 201, and the impact on these steps through automated tuning 202 of certain ACS configuration parameters 221, 222 in line with embodiments of the present invention. The ACS algorithm 201 collects data in step 211, like for instance the RSSI values for the different connected client devices, verifies if traffic is sent in step 212 and collects information indicative for interference from neighbouring access points in step 213, like for instance RSSI values for neighbouring access points on the different channels. In case of interference violation, the ACS algorithm 201 decides in step 214 to trigger channel reselection 215 for the access point. Interference violation is achieved when the interference by neighbouring access points is high for a period of time exceeding the ACS insensitivity. In case there is no interference violation, the steps of collecting data 211, analysing traffic 212 and collecting interference data 213 are repeated at regular time intervals or whenever instructed by an operator or technician. In step 216 it is verified if the channel reselection is not excessively frequent, i.e. faster than the ACS frequency allows. If this is the case, the channel reselection is locked out in step 217. If this is not the case, the new channel is used by the access point and the ACS algorithm 201 re-iterates steps 211, 212, 213 and 214 for the new channel until the next interference violation takes place. In line with the present invention, the configuration parameters of the ACS algorithm 201, i.e. the ACS insensitivity 221 as used in step 214 and the ACS frequency 222 as used in step 216 are tuned automatically through ACS algorithm tuning 202. How the ACS insensitivity 221 and ACS frequency 222 are tuned in an embodiment of the invention illustrated by Fig. 3, will be described in detail in the following paragraphs.

Fig. 3 shows the functional blocks of an embodiment of the ACS tuning device 300 according to the present invention. The ACS tuning device 300 comprises an observation unit 301, a behaviour tracking unit 302, a parameter processing unit 303 and an ACS parameter tuning unit 304.

The observation unit comprises an ACS algorithm performance observer 311 and a wireless network inspector 312. In the observation phase that is triggered upon activating the ACS parameter tuning, the task of the ACS algorithm performance observer 311 is to analyse the performance of currently used ACS algorithm. The ACS algorithm performance analysis may entail the following;
- analysing the amount of channel changing events over the past period, e.g. a period of a few days after the last ACS configuration parameter tuning took place;
- analysing how frequent channel hopping occurs and whether it has a stable value on a day-to-day basis;
- determining the channel hopping periods, i.e. detecting the time window(s) during which the channel hopping occurs;
- analysing if the channel hopping periods are stable on a day-to-day basis;
- analysing the number of different channels selected by the ACS algorithm; and
- analysing the channel hopping continuity.

In the observation phase, the task of the wireless network inspector 312 is to collect long-term information on the activity in the target WLAN and long-term information on the interference inferred by neighbouring WLANs. This will enable the wireless network inspector 312 to obtain a user activity pattern for the target WLAN and an interference pattern for the neighbouring WLANs that interfere and content with the target WLAN. To understand the reasons behind channel hopping behaviour, the wireless network inspector 312 reconstructs an interference score combining for instance the channel busy time, activity time and channel scan information obtained on the neighbouring WLANs. Using this interference score, the wireless network inspector 312 generates the interference pattern(s) for the neighbouring WLAN(s), corresponding to the time windows during which the calculated interference score is high, i.e. above an interference threshold, and therefore might lead to triggering of the ACS algorithm. The wireless network inspector 312 further analyses the target network behaviour. This entails collecting information on client activity on the target WLAN and deriving therefrom an activity pattern, i.e. the user activity period(s) or time window(s) during which there is significant user activity, i.e. above a certain activity threshold sufficiently high to have user experience impacted in case of a channel change.

The ACS performance analysis, the activity pattern for the target WLAN and the interference pattern for neighbouring WLANs are supplied to the parameter processing unit 303 for further processing.

The behaviour tracking unit 302 comprises a recent interference tracker 321 and a recent user activity tracker 322. The purpose of the recent user activity tracker 322 is to track recent values and behaviour of the target WLAN in order to enable the parameter processing unit 303 to detect anomalies in user activity. The purpose of the recent interference tracker 321 is to track recent values and behaviour of the neighbouring WLANs in order to enable the parameter processing unit 303 to detect anomalies in interference. The information tracked by the recent interference tracker 321 and the recent user activity tracker 322 may also be used to update the existing patterns.

The parameter processing unit 303 comprises an ACS behaviour assessor 331, an anomaly detector 332 and an ACS insensitivity & frequency estimator 333. The aim of these blocks is to process the inputs from two sources: the ACS observation unit 301 and the behaviour tracking unit 302.

Whereas the observation unit 301 via its ACS algorithm performance observer 311 provides peeks into the behaviour of the ACS algorithm over the last N days, i.e. a larger time window, the behaviour tracking unit 302 feeds the most recent behaviour. The ACS behaviour assessor 331 uses this information to determine whether the user activity period(s) include channel hopping events that might have negative impact to the users' experience and/or whether the user activity period(s) were plagued by a high interference score. Each of these situations leads to the conclusion that the current settings of the ACS algorithm are improper and further tuning is required.

The anomaly detector compares the long-term user activity pattern and long-term interference pattern respectively with the recent user activity and recent interference. In case that the recent interference values indicate that the previously detected interference pattern is followed, no alteration of the ACS configuration parameters is required. In the opposite case where the recent interference deviates from the previously detected interference pattern is discovered, further analysis of the state of the target WLAN is required. In case of high interference but no users' activity, the target WLAN should be able to adapt to the environment irrespective of the impact that frequent channel changes may have. However, both high interference and high user activity require a more conservative approach reflected wherein frequent channel changing is limited to avoid negative impact on the user experience in the active period.

The insensitivity and frequency estimator 333 determines new values for the ACS insensitivity 342 and the ACS frequency or lockout period 341 based on the detected state of the network with respect to user activity and interference patterns. In case of a user active period on the target WLAN, the lockout period 341 will be increased, or the ACS frequency will be decreased to avoid disturbing the ongoing activities, while the ACS insensitivity 342 will be decreased to enable fast but less frequent channel re-selection. In case of a non-active period on the target WLAN, the lockout period 341 will be decreased, or the ACS frequency will be increased while the ACS insensitivity is also increased. This way, the target WLAN adapts to the environment dynamics of neighbouring networks, i.e. the increased interference, before the client devices start to transmit or receive again.

The ACS parameter tuning unit 304 updates the ACS configuration parameters, i.e. the lockout period 341 and the ACS insensitivity 342, in line with the results of the parameter processing in block 303. The updating can be executed from a remote management centre or at the wireless access point implementing the target WLAN.

The observation by 301, the behaviour tracking by 302, the parameter processing by 303 and the ACS parameter tuning by 304 are executed periodically enabling automation and continuity in ACS parameter tuning.

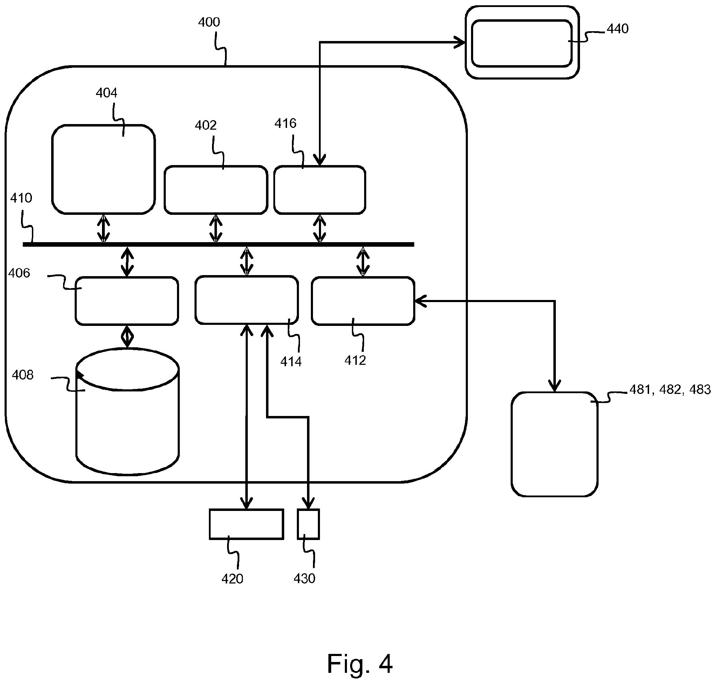

Fig. 4 shows a suitable computing system 400 according to an embodiment of the invention. Computing system 400 is suitable for implementing units 301, 302, 303 and 304 in according to the above described embodiment. Computing system 400 may in general be formed as a suitable general-purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system 400. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, etc. Communication interface 412 may comprise any transceiver-like mechanism such as for example one or more Ethernet interfaces that enables computing system 400 to communicate with other devices and/or systems, for example with other computing devices 481, 482, 483. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used. It is noticed that the entire method according to the present invention can be executed in a management centre or on the target WLAN access point. Computing system 400 could thus correspond to the processing system available in management centre 104 or the processing system available in the access point 101 when reflecting back to Fig. 1.

## Claims

1. A device (103; 202; 300) for automated tuning of configuration parameters (221, 222; 341, 342) of an auto-channel selection function (102; 201), abbreviated ACS function, in a wireless access point (101), said device (103; 202; 300) comprising:
- an ACS performance observer (311) adapted to collect performance parameter values indicative for past performance of said ACS function (102; 201);
- a wireless network inspector (312) adapted to collect a user activity pattern for said wireless access point (101) and an interference pattern for one or more neighbouring wireless access point (121, 122);
- a behaviour tracker (302) adapted to monitor recent user activity on said wireless access point (101) and recent interference of said one or more neighbouring wireless access point (121, 122);
- an anomaly detector (332) adapted to compare said recent user activity with said user activity pattern, to compare said recent interference with said interference pattern and to detect therefrom an anomaly in user activity or interference leading to contention;
- an ACS behaviour assessor (331) adapted to compare said performance parameter values with said user activity patterns and said interference patterns in order to detect improper setting of configuration parameters of said ACS function (102; 201) comprising insensitivity (221; 342) and/or frequency (222; 341) of said ACS function (102; 201) within a user activity period, said user activity period being a time window wherein said user activity patterns show a user activity above a certain activity threshold; and
- a configuration parameter adjuster (202; 304) adapted to modify said insensitivity (221; 342) and/or said frequency (222; 341) of said ACS function (102; 201) upon detection of said anomaly or detection of said improper setting of configuration parameters of said ACS function (102; 201), wherein said insensitivity (221; 342) of said ACS function (102; 201) corresponds to a configuration parameter specifying a time window during which interference above said interference deviation threshold be tolerated before said ACS function (102; 201) is triggering channel reselection, and wherein said frequency (222; 341) of said ACS function (102; 201) corresponds to a configuration parameter specifying a lockout time window, being a minimum time interval in between which said ACS function (102; 201) is triggering channel reselections.

2. A device (103; 202; 300) according to claim 1, wherein said performance parameter values comprise one or more of:
- an amount of channel hopping events triggered by said ACS function (102; 201) over a predetermined number of days;
- one or more time windows during the day wherein channel hopping events triggered by said ACS function (102; 201) occur;
- a number of different channels that were selected by said ACS function (102; 201).

3. A device (103; 202; 300) according to claim 1, wherein said user activity pattern comprises one or more time periods during the day wherein user activity on said wireless access point (101) exceeds a certain activity threshold.

4. A device (103; 202; 300) according to claim 1, wherein said interference pattern comprises one or more time periods during the day wherein an interference score determined from channel busy time, activity time and channel scans of said one or more neighbouring wireless access point (121, 122) exceeds a certain interference threshold.

5. A method for automated tuning of configuration parameters (221, 222; 341, 342) of an auto-channel selection function (102; 201), abbreviated ACS function, in a wireless access point (101), said method comprising:
- collecting performance parameter values indicative for past performance of said ACS function (102; 201);
- collecting a user activity pattern for said wireless access point (101) and an interference pattern for one or more neighbouring wireless access points (121, 122);
- monitoring recent user activity on said wireless access point (101) and recent interference of said neighbouring wireless access points (121, 122);
- comparing said recent user activity with said user activity pattern and comparing said recent interference with said interference pattern to detect therefrom an anomaly in user activity or interference leading to contention;
- comparing said performance parameter values with said user activity patterns and said interference patterns in order to detect improper setting of configuration parameters of said ACS function (102; 201) comprising insensitivity (221; 342) and/or frequency (222; 341) of said ACS function (102; 201) within a user activity period, said user activity period being a time window wherein said user activity patterns show a user activity above a certain threshold; and
- modifying said insensitivity (221; 342) and/or said frequency (222; 341) of said ACS function (102; 201) upon detection of said anomaly or detection of said improper setting of configuration parameters of said ACS function (102; 201), wherein said insensitivity (221; 342) of said ACS function (102; 201) corresponds to a configuration parameter specifying a time window during which interference above said interference deviation threshold be tolerated before said ACS function (102; 201) is triggering channel reselection, and wherein said frequency (222; 341) of said ACS function (102; 201) corresponds to a configuration parameter specifying a lockout time window, being a minimum time interval in between which said ACS function (102; 201) is triggering channel reselections.

6. A computer program product comprising computer-executable instructions for performing the method according to claim 5 when the program is run on the device (400) of claim 1.

7. A computer readable storage medium comprising the computer program product according to claim 6.

8. A computing system (400) comprising the means of the device of claim 1 for carrying out the method according to claim 5.

## Patentansprüche

1. Vorrichtung (103; 202; 300) zum automatischen Abstimmen von Konfigurationsparametern (221, 222; 341, 342) einer automatischen Kanalwahlfunktion (102; 201), die als ACS-Funktion abgekürzt wird, in einem drahtlosen Zugangspunkt (101), wobei die Vorrichtung (103; 202; 300) Folgendes umfasst:
- einen ACS-Leistungsbeobachter (311), der ausgelegt ist, Leistungsparameterwerte zu sammeln, die eine vergangene Leistung der ACS-Funktion (102; 201) angeben;
- einen drahtlosen Netzprüfer (312), der ausgelegt ist, ein Anwenderaktivitätsmuster für den drahtlosen Zugangspunkt (101) und ein Beeinflussungsmuster für einen oder mehrere benachbarte drahtlose Zugangspunkte (121, 122) zu sammeln;
- einen Verhaltensverfolger (302), der ausgelegt ist, eine kürzliche Anwenderaktivität im drahtlosen Zugangspunkt (101) und eine kürzliche Beeinflussung des einen oder der mehreren benachbarten drahtlosen Zugangspunkte (121, 122) zu überwachen;
- einen Anomaliedetektor (332), der ausgelegt ist, die kürzliche Anwenderaktivität mit dem Anwenderaktivitätsmuster zu vergleichen, die kürzliche Beeinflussung mit dem Beeinflussungsmuster zu vergleichen und daraus eine Anomalie der Anwenderaktivität oder eine Beeinflussung, die zu einem Konflikt führt, zu detektieren;
- einen ACS-Verhaltensbewerter (331), der ausgelegt ist, die Leistungsparameterwerte mit den Anwenderaktivitätsmustern und den Beeinflussungsmustern zu vergleichen, um eine ungeeignete Einstellung von Konfigurationsparametern der ACS-Funktion (102; 201), die eine Unempfindlichkeit (221; 342) und/oder eine Frequenz (222; 341) der ACS-Funktion (102; 201) in einem Anwenderaktivitätszeitraum umfasst, zu detektieren, wobei der Anwenderaktivitätszeitraum ein Zeitfenster ist, in dem die Anwenderaktivitätsmuster eine Anwenderaktivität über einem bestimmten Aktivitätsschwellenwert zeigen; und
- eine Konfigurationsparametereinstelleinrichtung (202; 304), die ausgelegt ist, nach der Detektion der Anomalie oder der Detektion der ungeeigneten Einstellung von Konfigurationsparametern der ACS-Funktion (102; 201) die Unempfindlichkeit (221; 342) und/oder die Frequenz (222; 341) der ACS-Funktion (102; 201) zu modifizieren, wobei die Unempfindlichkeit (221; 342) der ACS-Funktion (102; 201) einem Konfigurationsparameter entspricht, der ein Zeitfenster festlegt, während dessen eine Beeinflussung über dem Beeinflussungsabweichungsschwellenwert toleriert werden soll, bevor die ACS-Funktion (102; 201) eine Kanalneuauswahl auslöst, und wobei die Frequenz (222; 341) der ACS-Funktion (102; 201) einem Konfigurationsparameter entspricht, der ein Sperrzeitfenster festlegt, das ein Mindestzeitintervall ist, zwischen denen die ACS-Funktion (102; 201) Kanalneuauswahlen auslöst.

2. Vorrichtung (103; 202; 300) nach Anspruch 1, wobei die Leistungsparameterwerte Folgendes umfassen:
- eine Menge von Kanalsprungereignissen, die durch die ACS-Funktion (102; 201) über eine vorgegebene Anzahl von Tagen ausgelöst werden; und/oder
- ein oder mehrere Zeitfenster während des Tages, in denen Kanalsprungereignisse, die durch die ACS-Funktion (102; 201) ausgelöst werden, auftreten; und/oder
- mehrere verschiedene Kanäle, die durch die ACS-Funktion (102; 201) gewählt wurden.

3. Vorrichtung (103; 202; 300) nach Anspruch 1, wobei das Anwenderaktivitätsmuster einen oder mehrere Zeiträume während des Tages umfasst, in denen eine Anwenderaktivität im drahtlosen Zugangspunkt (101) einen bestimmten Aktivitätsschwellenwert überschreitet.

4. Vorrichtung (103; 202; 300) nach Anspruch 1, wobei das Beeinflussungsmuster einen oder mehrere Zeiträume während des Tages umfasst, in denen eine Beeinflussungspunktzahl, die aus einer Kanalauslastzeit, einer Aktivitätszeit und von Kanalsuchen des einen oder der mehreren benachbarten drahtlosen Zugangspunkte (121, 122) bestimmt wird, einen bestimmten Beeinflussungsschwellenwert überschreitet.

5. Verfahren zum automatischen Abstimmen von Konfigurationsparametern (221, 222; 341, 342) einer automatischen Kanalwahlfunktion (102; 201), die als ACS-Funktion abgekürzt wird, in einem drahtlosen Zugangspunkt (101), wobei das Verfahren Folgendes umfasst:
- Sammeln von Leistungsparameterwerten, die eine vergangene Leistung der ACS-Funktion (102; 201) angeben;
- Sammeln eines Anwenderaktivitätsmusters für den drahtlosen Zugangspunkt (101) und eines Beeinflussungsmusters für einen oder mehrere benachbarte drahtlose Zugangspunkte (121, 122);
- Überwachen einer kürzlichen Anwenderaktivität im drahtlosen Zugangspunkt (101) und einer kürzlichen Beeinflussung des einen oder der mehreren benachbarten drahtlosen Zugangspunkte (121, 122);
- Vergleichen der kürzlichen Anwenderaktivität mit dem Anwenderaktivitätsmuster und Vergleichen der kürzlichen Beeinflussung mit dem Beeinflussungsmuster, um daraus eine Anomalie der Anwenderaktivität oder eine Beeinflussung, die zu einem Konflikt führt, zu detektieren;
- Vergleichen der Leistungsparameterwerte mit den Anwenderaktivitätsmustern und den Beeinflussungsmustern, um eine ungeeignete Einstellung von Konfigurationsparametern der ACS-Funktion (102; 201), die eine Unempfindlichkeit (221; 342) und/oder eine Frequenz (222; 341) der ACS-Funktion (102; 201) in einem Anwenderaktivitätszeitraum umfasst, zu detektieren, wobei der Anwenderaktivitätszeitraum ein Zeitfenster ist, in dem die Anwenderaktivitätsmuster eine Anwenderaktivität über einem bestimmten Schwellenwert zeigen; und
- Modifizieren der Unempfindlichkeit (221; 342) und/oder der Frequenz (222; 341) der ACS-Funktion (102; 201) nach der Detektion der Anomalie oder der Detektion der ungeeigneten Einstellung von Konfigurationsparametern der ACS-Funktion (102; 201), wobei die Unempfindlichkeit (221; 342) der ACS-Funktion (102; 201) einem Konfigurationsparameter entspricht, der ein Zeitfenster festlegt, während dessen eine Beeinflussung über dem Beeinflussungsabweichungsschwellenwert toleriert werden soll, bevor die ACS-Funktion (102; 201) eine Kanalneuauswahl auslöst, und wobei die Frequenz (222; 341) der ACS-Funktion (102; 201) einem Konfigurationsparameter entspricht, der ein Sperrzeitfenster festlegt, das ein Mindestzeitintervall ist, zwischen denen die ACS-Funktion (102; 201) Kanalneuauswahlen auslöst.

6. Computerprogrammprodukt, das computerausführbare Anweisungen zum Durchführen des Verfahrens nach Anspruch 5 umfasst, wenn das Programm in der Vorrichtung (400) von Anspruch 1 ausgeführt wird.

7. Computerlesbares Speichermedium, das das Computerprogrammprodukt nach Anspruch 6 umfasst.

8. Rechensystem (400), das die Mittel der Vorrichtung von Anspruch 1 zum Ausführen des Verfahrens nach Anspruch 5 umfasst.

## Revendications

1. Dispositif (103 ; 202 ; 300) de réglage automatique de paramètres de configuration (221, 222 ; 341, 342) d'une fonction de sélection automatique de canal (102 ; 201), abrégée fonction ACS, dans un point d'accès sans fil (101), ledit dispositif (103 ; 202 ; 300) comprenant :
un module d'observation de performances ACS (311) conçu pour collecter des valeurs de paramètre de performances représentatives de performances passées de ladite fonction ACS (102 ; 201) ;
un module d'inspection de réseau sans fil (312) conçu pour collecter un modèle d'activité d'utilisateur pour ledit point d'accès sans fil (101) et un modèle de brouillage pour un ou plusieurs points d'accès sans fil voisins (121, 122) ;
un module de suivi de comportement (302) conçu pour surveiller une activité d'utilisateur récente sur ledit point d'accès sans fil (101) et un brouillage récent dudit ou desdits points d'accès sans fil voisins (121, 122) ;
un module de détection d'anomalie (332) conçu pour comparer ladite activité d'utilisateur récente audit modèle d'activité d'utilisateur, pour comparer ledit brouillage récent audit modèle de brouillage et pour détecter à partir desdites comparaisons une anomalie dans une activité d'utilisateur ou dans un brouillage, conduisant à une contention ;
un module d'évaluation de comportement ACS (331) conçu pour comparer lesdites valeurs de paramètre de performances auxdits modèles d'activité d'utilisateur et auxdits modèles de brouillage afin de détecter un réglage inapproprié de paramètres de configuration de ladite fonction ACS (102 ; 201), comprenant une insensibilité (221 ; 342) et/ou une fréquence (222 ; 341) de ladite fonction ACS (102 ; 201) pendant une période d'activité d'utilisateur, ladite période d'activité d'utilisateur étant une fenêtre de temps dans laquelle lesdits modèles d'activité d'utilisateur présentent une activité d'utilisateur supérieure à un certain seuil d'activité ; et
un module de réglage de paramètres de configuration (202 ; 304) conçu pour modifier ladite insensibilité (221 ; 342) et/ou ladite fréquence (222 ; 341) de ladite fonction ACS (102 ; 201) au moment de détecter ladite anomalie ou de détecter ledit réglage inapproprié de paramètres de configuration de ladite fonction ACS (102 ; 201), ladite insensibilité (221 ; 342) de ladite fonction ACS (102 ; 201) correspondant à un paramètre de configuration spécifiant une fenêtre de temps pendant laquelle un brouillage supérieur audit seuil d'écart de brouillage est toléré avant que ladite fonction ACS (102 ; 201) ne déclenche une resélection de canal, et ladite fréquence (222 ; 341) de ladite fonction ACS (102 ; 201) correspondant à un paramètre de configuration spécifiant une fenêtre de temps de verrouillage, qui est un intervalle de temps minimum pendant lequel ladite fonction ACS (102 ; 201) déclenche des resélections de canal.

2. Dispositif (103 ; 202 ; 300) selon la revendication 1, dans lequel lesdites valeurs de paramètre de performance comprennent une ou plusieurs valeurs parmi :
un nombre d'événements de saut de canal déclenchés par ladite fonction ACS (102 ; 201) pendant un nombre prédéterminé de jours ;
une ou plusieurs fenêtres de temps pendant le jour où des événements de saut de canal déclenchés par ladite fonction ACS (102 ; 201) se produisent ;
un nombre de canaux différents qui ont été sélectionnés par ladite fonction ACS (102 ; 201).

3. Dispositif (103 ; 202 ; 300) selon la revendication 1, dans lequel ledit modèle d'activité d'utilisateur comprend une ou plusieurs périodes de temps pendant le jour où une activité d'utilisateur sur ledit point d'accès sans fil (101) dépasse un certain seuil d'activité.

4. Dispositif (103 ; 202 ; 300) selon la revendication 1, dans lequel ledit modèle de brouillage comprend une ou plusieurs périodes de temps pendant le jour où un score de brouillage, déterminé à partir d'un temps d'occupation de canal, d'un temps d'activité et des analyses de canal dudit ou desdits points d'accès sans fil voisins (121, 122), dépasse un certain seuil de brouillage.

5. Procédé de réglage automatique de paramètres de configuration (221, 222 ; 341, 342) d'une fonction de sélection automatique de canal (102 ; 201), abrégée fonction ACS, dans un point d'accès sans fil (101), ledit procédé comprenant :
la collecte de valeurs de paramètre de performances représentatives de performances passées de ladite fonction ACS (102 ; 201) ;
la collecte d'un modèle d'activité d'utilisateur pour ledit point d'accès sans fil (101) et d'un modèle de brouillage pour un ou plusieurs points d'accès sans fil voisins (121, 122) ;
la surveillance d'une activité d'utilisateur récente sur ledit point d'accès sans fil (101) et d'un brouillage récent desdits points d'accès sans fil voisins (121, 122) ;
la comparaison de ladite activité d'utilisateur récente audit modèle d'activité d'utilisateur et la comparaison dudit brouillage récent audit modèle de brouillage pour détecter à partir desdites comparaisons une anomalie dans une activité d'utilisateur ou dans un brouillage, conduisant à une contention ;
la comparaison desdites valeurs de paramètre de performances auxdits modèles d'activité d'utilisateur et auxdits modèles de brouillage afin de détecter un réglage inapproprié de paramètres de configuration de ladite fonction ACS (102 ; 201), comprenant une insensibilité (221 ; 342) et/ou une fréquence (222 ; 341) de ladite fonction ACS (102 ; 201) pendant une période d'activité d'utilisateur, ladite période d'activité d'utilisateur étant une fenêtre de temps dans laquelle lesdits modèles d'activité d'utilisateur présentent une activité d'utilisateur supérieure à un certain seuil ; et
la modification de ladite insensibilité (221 ; 342) et/ou de ladite fréquence (222 ; 341) de ladite fonction ACS (102 ; 201) au moment de détecter ladite anomalie ou de détecter ledit réglage inapproprié de paramètres de configuration de ladite fonction ACS (102 ; 201), ladite insensibilité (221 ; 342) de ladite fonction ACS (102 ; 201) correspondant à un paramètre de configuration spécifiant une fenêtre de temps pendant laquelle un brouillage supérieur audit seuil d'écart de brouillage est toléré avant que ladite fonction ACS (102 ; 201) ne déclenche une resélection de canal, et ladite fréquence (222 ; 341) de ladite fonction ACS (102 ; 201) correspondant à un paramètre de configuration spécifiant une fenêtre de temps de verrouillage, qui est un intervalle de temps minimum pendant lequel ladite fonction ACS (102 ; 201) déclenche des resélections de canal.

6. Produit de programme informatique, comprenant des instructions exécutables par ordinateur pour réaliser le procédé selon la revendication 5 quand le programme est exécuté sur le dispositif (400) selon la revendication 1.

7. Support de stockage lisible par ordinateur, comprenant le produit de programme informatique selon la revendication 6.

8. Système informatique (400) comprenant les moyens du dispositif selon la revendication 1 pour réaliser le procédé selon la revendication 5.
